# EUROPEAN PATENT APPLICATION

(11) **EP 2 802 126 A1**
(43) Date of publication of application: **12.11.2014**
(21) Application number: 12868138.4
(22) Date of filing: 23.08.2012
(51) Int. Cl.: H04L 29/12

(54) **METHOD FOR CONFIGURING DHCPV6 CLIENT, DHCPV6 CLIENT, NETWORK DEVICE, AND NETWORK SYSTEM**

(30) Priority: 10.02.2012 CN 201210029669
(71) Applicant: Huawei Technologies Co., Ltd., Shenzhen, Guangdong 518129 (CN)
(72) Inventor: LIU, Bing, Shenzhen Guangdong 518129 (CN); FU, Yu, Shenzhen Guangdong 518129 (CN)
(74) Representative: Isarpatent
(86) International application number: PCT/CN2012/080493
(87) International publication number: WO 2013/117088

(57) **Abstract**

An embodiment of the present invention provides a method for configuring a DHCPv6 client. The method comprises: a DHCPv6 client receiving a DHCPv6 advertisement message sent by a network device having a DHCPv6 function, the DHCPv6 advertisement message comprising a management domain identifier of the network device; if the DHCPv6 client does not save the management domain identifier, the DHCPv6 client sending a DHCPv6 request message to the network device; the DHCPv6 client receiving a DHCPv6 response message sent by the network device and completing configuration of the DHCPv6 client. Embodiments of the present invention also provide a DHCPv6 client, a network device, and a network system. Through the technical solution provided by the embodiment of the present invention, multiple network devices supporting a DHCPv6 server function can configure the same DHCPv6 client, so as to provide technical support for realizing IPv6 client and network multi-homing.

## Description

### TECHNOLOGY FIELD

The embodiments of the present invention relate to the technical field of communications, and in particular to a method for configuring a DHCPv6 client, a DHCPv6 client, a network device and a network system.

### BACKGROUND

A client network may access Internet by accessing an internet service provider (Internet Service Provider, ISP). The client network may simultaneously support multiple connection services provided by multiple ISPs to improve the reliability of the connection of the client network and enhance an ability of redundancy protection. Thus, in the case where a failure occurs at an access of the client network to the Internet via a certain ISP, the client network may change a session path to access the Internet via another ISP, thereby ensuring a stable transmission of the traffic flow via the client network. The client network simultaneously supporting multiple connection services provided by multiple ISPs is usually called a multi-homed network. Because the client network may have good availability and performance by using the technology of multi-homed network, the application of multi-homed network in the field of internet protocol version 6 (Internet Protocol Version 6, IPv6) is paid more intention. The protocol fundamental specification of dynamic host configuration protocol for IPv6 (Dynamic Host Configuration Protocol for IPv6, DHCPv6) is defined by the RFC3315 of the IETF, and DHCPv6 is a stateful address auto configuration protocol. In the process of the stateful address configuration, a DHCPv6 sever may assign complete IPv6 addresses to DHCPv6 clients, and may eventually store a binding relationship between the assigned IPv6 address and the DHCPv6 client, thereby enhancing the manageability of the network. To implement multi-homing IPv6 client network, it is necessary to implement a function that multiple DHCPv6 severs can configure the same DHCPv6 client. In compliance with RFC3315, a DHCPv6 client sends DHCPv6 solicit (Solicit) messages to find DHCPv6 severs in the network when the DHCPv6 client is on line. The DHCPv6 client may receive DHCPv6 advertise (Advertise) messages from multiple DHCPv6 severs, because there are multiple DHCPv6 severs in the network. In compliance with RFC3315, the DHCPv6 client may select one DHCPv6 sever from the multiple DHCPv6 severs sending the DHCPv6 advertise messages, and send a DHCPv6 request (Request) message to the selected DHCPv6 sever. The DHCPv6 sever receives the DHCPv6 request message, and may send a DHCPv6 reply (Reply) message to the DHCPv6 client. In this way, the DHCPv6 sever may implement the management and configuration for the DHCPv6 client. Based on the standard of the current DHCPv6 protocol, when there are multiple DHCPv6 severs in the network, the DHCPv6 client can only select one of the multiple DHCPv6 severs to configure the DHCPv6 client itself, which is adverse to the multi-homing IPv6 client network.

### SUMMARY

Embodiments of the present invention provide a method for configuring a DHCPv6 client, a DHCPv6 client, a network device and a network system, so as to solve the problem that multiple network devices functioning as DHCPv6 severs can not configure a DHCPv6 client in a multi-homing IPv6 client network.

According to an aspect of an embodiment of the present invention, a method for configuring a DHCPv6 client is provided, which is applied to a network including the DHCPv6 client and a network device functioning as a DHCPv6 server. The method includes:
receiving, by the DHCPv6 client, a DHCPv6 advertise message from the network device, wherein the DHCPv6 advertise message includes a management domain identifier of the network device;
sending, by the DHCPv6 client, a DHCPv6 request message to the network device and storing the management domain identifier, when the DHCPv6 client does not save the management domain identifier; and
receiving, by the DHCPv6 client, a DHCPv6 reply message from the network device and configure the DHCPv6 client according to the DHCPv6 reply message, wherein the DHCPv6 reply message includes an IPv6 prefix assigned to the DHCPv6 client by the network device and a network configuration parameter assigned to the DHCPv6 client by the network device, or the DHCPv6 reply message includes an IPv6 address assigned to the DHCPv6 client by the network device and a network configuration parameter assigned to the DHCPv6 client by the network device.

According to another aspect of an embodiment of the present invention, a method for configuring a client is provided, which is applied to a network including a DHCPv6 client and a network device functioning as a DHCPv6 server. The method includes:
sending, by the network device, a DHCPv6 advertise message to the DHCPv6 client, wherein the DHCPv6 advertise message includes a management domain identifier of the network device;
receiving, by the network device, a DHCPv6 request message from the DHCPv6 client; and
sending, by the network device, a DHCPv6 reply message to the DHCPv6 client, wherein the DHCPv6 reply message is adapted to configure the DHCPv6 client, the DHCPv6 reply message includes an IPv6 prefix assigned to the DHCPv6 client and a network configuration parameter assigned to the DHCPv6 client by the network device, or the DHCPv6 reply message includes an IPv6 address assigned to the DHCPv6 client and a network configuration parameter assigned to the DHCPv6 client by the network device.

According to another aspect of an embodiment of the present invention, a DHCPv6 client is provided, which is applied to a network including a network device functioning as a DHCPv6 server, wherein the DHCPv6 client includes an advertise message receiving unit, a request message sending unit, a reply message receiving unit, a configuring unit and a storage unit, and wherein
the advertise message receiving unit is configured to receive a DHCPv6 advertise message from the network device, wherein the DHCPv6 advertise message includes a management domain identifier of the network device;
the request message sending unit is configured to send a DHCPv6 request message to the network device and store the management domain identifier in the storage unit, when the storage unit does not save the management domain identifier;
the reply message receiving unit is configured to receive a DHCPv6 reply message from the network device, wherein the DHCPv6 reply message includes an IPv6 prefix assigned to the DHCPv6 client by the network device and a network configuration parameter assigned to the DHCPv6 client by the network device, or the DHCPv6 reply message includes an IPv6 address assigned to the DHCPv6 client by the network device and a network configuration parameter assigned to the DHCPv6 client by the network device;
the storage unit is configured to store the management domain identifier of the network device, the IPv6 prefix and the network configuration parameter; or the storage unit is configure to store the management domain identifier of the network device, the IPv6 address and the network configuration parameter; and
the configuring unit is configured to configure the DHCPv6 client according to the DHCPv6 reply message.

According to another aspect of an embodiment of the present invention, a network device functioning as a DHCPv6 server is provided, which is applied to a network including a DHCPv6 client, wherein the network device includes:
an advertise message sending unit configured to send a DHCPv6 advertise message to the DHCPv6 client, wherein the DHCPv6 advertise message includes a management domain identifier of the network device;
a request message receiving unit configured to receive a DHCPv6 request message from the DHCPv6 client; and
a reply message sending unit configured to send a DHCPv6 reply message to the DHCPv6 client, wherein the DHCPv6 reply message is adapted to configure the DHCPv6 client, the DHCPv6 reply message includes an IPv6 prefix assigned to the DHCPv6 client and a network configuration parameter assigned to the DHCPv6 client by the network device, or the DHCPv6 reply message includes an IPv6 address assigned to the DHCPv6 client and a network configuration parameters assigned to the DHCPv6 client by the network device.

According to another aspect of an embodiment of the present invention, a network system with a DHCPv6 client and a network device functioning as a DHCPv6 server is provided, wherein
the DHCPv6 client includes an advertise message receiving unit, a request message sending unit, a reply message receiving unit, a configuring unit and a storage unit; and the network device functioning as the DHCPv6 server includes an advertise message sending unit, a request message receiving unit and a reply message sending unit, wherein
the advertise message receiving unit is configured to receive a DHCPv6 advertise message from the advertise message sending unit, wherein the DHCPv6 advertise message includes a management domain identifier of the network device;
the request message sending unit is configured to send a DHCPv6 request message to the network device and store the management domain identifier in the storage unit, when the storage unit does not save the management domain identifier;
the reply message receiving unit is configured to receive a DHCPv6 reply message from the reply message sending unit, wherein the DHCPv6 reply message includes an IPv6 prefix assigned to the DHCPv6 client by the network device and a network configuration parameter assigned to the DHCPv6 client by the network device, or the DHCPv6 reply message includes an IPv6 address assigned to the DHCPv6 client by the network device and a network configuration parameter assigned to the DHCPv6 client by the network device;
the storage unit is configured to store the management domain identifier of the network device, the IPv6 prefix and the network configuration parameter; or the storage unit is configure to store the management domain identifier of the network device, the IPv6 address and the network configuration parameter;
the configuring unit is configured to configure the DHCPv6 client according to the DHCPv6 reply message;
the advertise message sending unit is configured to send the DHCPv6 advertise message to the advertise message receiving unit, wherein the DHCPv6 advertise message includes the management domain identifier of the network device;
the request message receiving unit is configured to receive the DHCPv6 request message from the request message sending unit; and
the reply message sending unit is configured to send the DHCPv6 reply message to the reply message receiving unit, wherein the DHCPv6 reply message is adapted to configure the DHCPv6 client.

According to the technical solution of the embodiments of the present invention, when there are multiple network devices in the network belong to different management domains and function as DHCPv6 severs, the multiple network devices functioning as the DHCPv6 sever can configure the same DHCPv6 client, thereby providing technical support for implementing a multi-homing IPv6 client network.

### BRIEF DESCRIPTION OF THE DRAWINGS

In order to specify the technical solution according to the embodiments of the invention or the existing technical solutions, the drawings in the embodiments and the existing technical solutions may be briefly described. Obviously, the following drawings are only part of the embodiments of the invention, and a person of ordinary skill in the art may derive other drawings according to these drawings without creative work.
Fig. 1 is a schematic flowchart of a method for configuring a DHCPv6 client according to a first embodiment of the present invention;
Fig. 2 is a schematic structural diagram of a DHCPv6 option in the method for configuring the DHCPv6 client according to the first embodiment of the present invention;
Fig. 3 is a schematic flowchart of a method for configuring a DHCPv6 client according to a second embodiment of the present invention;
Fig. 4 is a schematic diagram of a network system according to a third embodiment of the present invention; and
Fig. 5 is a schematic diagram of another network system according to the third embodiment of the present invention.

### DETAILED DESCRIPTION OF THE EMBODIMENTS

To clarify the purpose, technical solution and advantages of the embodiments of the present invention, the technical solution according to the embodiments of the present invention are described clearly as follows in conjunction with the accompany drawings in the embodiments of the present invention. It is obvious that the described embodiments are only a part of the embodiments according to the present invention. All the other embodiments obtained by those skilled in the art based on the embodiments in the present invention without any creative work belong to the scope of protection of the present invention.

### Embodiment 1

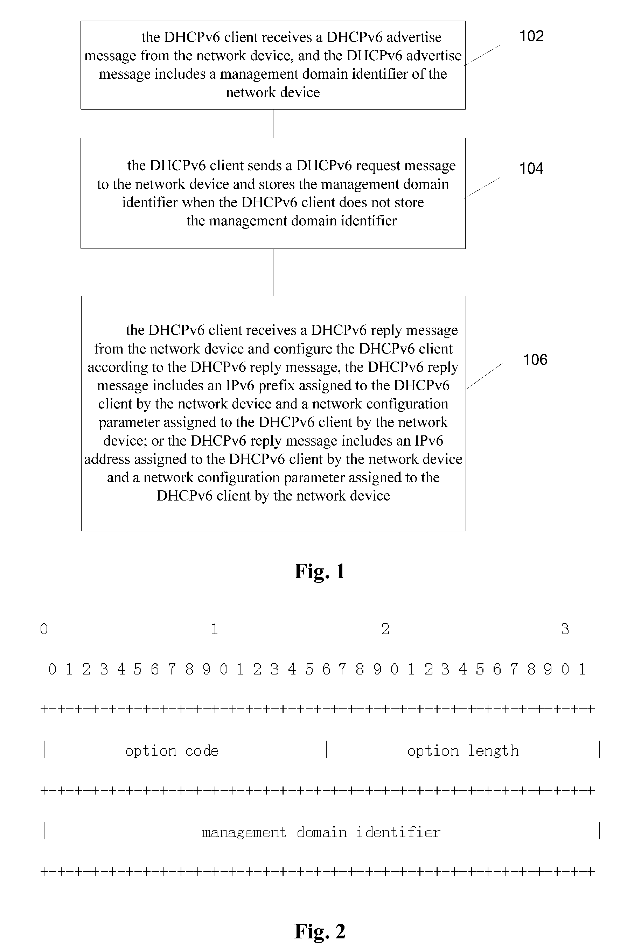

Referring to Fig. 1, a method for configuring a DHCPv6 client is provided according to an embodiment of the present invention. The method is applied to a network with the DHCPv6 client and a network device functioning as a DHCPv6 server. The method includes:
102: The DHCPv6 client receives a DHCPv6 advertise message from the network device. The DHCPv6 advertise message includes a management domain identifier of the network device.
104: The DHCPv6 client sends a DHCPv6 request message to the network device and stores the management domain identifier, when the client does not store the management domain identifier.
106: The DHCPv6 client receives a DHCPv6 reply message from the network device and configures the DHCPv6 client according to the DHCPv6 reply message. The DHCPv6 reply message includes an IPv6 prefix assigned to the DHCPv6 client by the network device and a network configuration parameter assigned to the DHCPv6 client by the network device; or the DHCPv6 reply message includes an IPv6 address assigned to the DHCPv6 client by the network device and a network configuration parameters assigned to the DHCPv6 client by the network device.

The method according to the embodiment of the present invention is applicable to the network with the DHCPv6 client and the network device functioning as the DHCPv6 server. After the DHCPv6 client is on line, a DHCPv6 solicit message may be broadcasted to other devices in the network. The DHCPv6 solicit message is adapted to request the network device functioning as the DHCPv6 server to configure the DHCPv6 client. After received the DHCPv6 solicit message, the network device functioning as the DHCPv6 server may send the DHCPv6 advertise message to the DHCPv6 client. The DHCPv6 advertise message is used to notify the DHCPv6 client that the network device can configure the DHCPv6 client. The DHCPv6 advertise message includes the management domain identifier of the network device.

Optionally, the DHCPv6 advertise message includes a DHCPv6 option. The DHCPv6 option includes the management domain identifier configured to identify a management domain to which the network device belongs. The management domain identifier may be a name of an ISP or a name of an organization. The option may further include an option code and an option length. A format of the option is shown in Fig. 2.

The option code is used to indicate that the option carries the management domain identifier. The option code occupies 16 bits (bit) and ranges from 0 to 65535. The value of the option code may be predefined, as long as the value is not used by other types of option.

The option length is used to indicate a total length of the DHCPv6 option, and the option length occupies 16 bits.

The management domain identifier is used to indicate the management domain.

The DHCPv6 client stores the management domain identifiers of all the network devices which have a function of the DHCPv6 and have already established a configuration relationship with the DHCPv6 client. After receiving the DHCPv6 advertise message from the network device, the DHCPv6 client parses the option of the DHCPv6 advertise message. In the case where the option code of the option indicates that the option carries the management domain identifier, the DHCPv6 client obtains the management domain identifier of the network device. When the DHCPv6 client does not store the management domain identifier, it means that the DHCPv6 client has not yet been configured by the network device. Therefore, the DHCPv6 client may send the DHCPv6 request message to the network device and store the management domain identifier of the network device. The DHCPv6 request message is adapted to request the network device to configure the DHCPv6 client. After receiving the DHCPv6 request message, the network device may send the DHCPv6 reply message to the DHCPv6 client. The DHCPv6 reply message includes the IPv6 prefix assigned to the DHCPv6 client by the network device and the network configuration parameter assigned to the DHCPv6 client by the network device; or the DHCPv6 reply message includes the IPv6 address assigned to the DHCPv6 client by the network device and the network configuration parameter assigned to the DHCPv6 client by the network device. After receiving the DHCPv6 reply message, the DHCPv6 client may store the management domain identifier of the network device, the IPv6 prefix and the network configuration parameter; or the DHCPv6 client may store the management domain identifier of the network device, the IPv6 address and the network configuration parameter. The DHCPv6 client may configure the DHCPv6 client itself according to the DHCPv6 reply message. When there are multiple network devices functioning as the DHCPv6 servers in the network and the multiple network devices belong to different management domains, the multiple network devices can configure the same DHCPv6 client.

The network device may be a router or a switch which functions as the DHCPv6 server.

With the method according to the embodiment of the present invention, in the case where multiple network devices belong to different management domains and function as DHCPv6 severs, the multiple network devices functioning as the DHCPv6 severs can implement the configuration for the DHCPv6 client, thereby providing technical support for implementing the multi-homing IPv6 client network.

### Embodiment 2

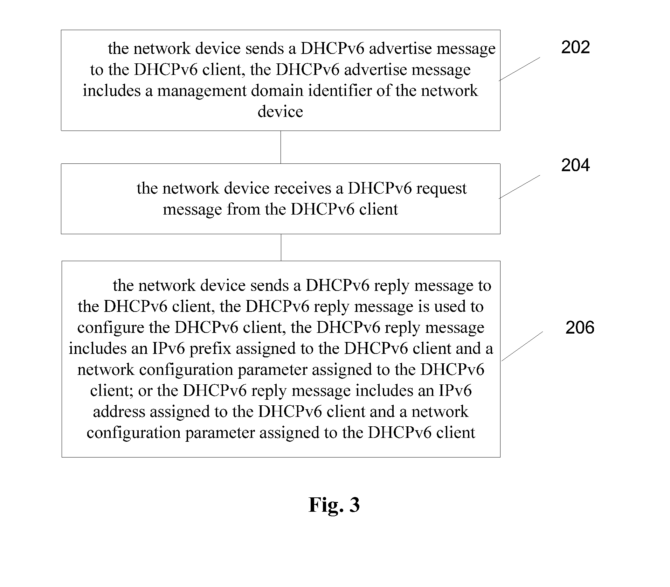

Referring to Fig. 3, a method for configuring a DHCPv6 client is provided according to an embodiment of the present invention. The method is applied to a network with the DHCPv6 client and a network device functioning as a DHCPv6 server. The method includes:
202: The network device sends a DHCPv6 advertise message to the DHCPv6 client. The DHCPv6 advertise message includes a management domain identifier of the network device.
204: The network device receives a DHCPv6 request message from the DHCPv6 client.
206: The network device sends a DHCPv6 reply message to the DHCPv6 client. The DHCPv6 reply message is adapted to configure the DHCPv6 client. The DHCPv6 reply message includes an IPv6 prefix assigned to the DHCPv6 client by the network device and a network configuration parameter assigned to the DHCPv6 client by the network device; or the DHCPv6 reply message includes an IPv6 address assigned to the DHCPv6 client by the network device and a network configuration parameter assigned to the DHCPv6 client by the network device.

After the DHCPv6 client is on line, a DHCPv6 solicit message may be broadcasted to other devices in the network. The DHCPv6 solicit message is adapted to request the network device functioning as the DHCPv6 server to configure the DHCPv6 client. After received the DHCPv6 solicit message, the network device functioning as the DHCPv6 server may send the DHCPv6 advertise message to the DHCPv6 client. The DHCPv6 advertise message is used to notify the DHCPv6 client that the network device can configure the DHCPv6 client. The DHCPv6 advertise message includes the management domain identifier of the network device.

Optionally, the DHCPv6 advertise message includes a DHCPv6 option. The option includes the management domain identifier configured to identify a management domain of the network device. The management domain identifier may be a name of an ISP or a name of an organization. The option may further include an option code and an option length. A format of the option is shown in Fig. 2.

The option code is used to indicate that the option carries the management domain identifier. The option code occupies 16 bits (bit) and ranges from 0 to 65535. The value of the option code may be predefined, as long as the value is not used by other types of option.

The option length is used to indicate a total length of the DHCPv6 option, and the option length occupies 16 bits.

The management domain identifier is used to indicate the management domain.

The DHCPv6 client stores the management domain identifiers of all the network devices which have a function of DHCPv6 and have already established a configuration relationship with the DHCPv6 client. After receiving the DHCPv6 advertise message from the network device, the DHCPv6 client parses the option of the DHCPv6 advertise message. In the case where the option code of the option portion indicates that the option carries the management domain identifier, the DHCPv6 client obtains the management domain identifier of the network device. When the DHCPv6 client does not store the management domain identifier, it means that the DHCPv6 client has not yet been configured by the network device. Therefore, the DHCPv6 client may send the DHCPv6 request message to the network device and store the management domain identifier of the network device. The DHCPv6 request message is adapted to request the network device to configure the DHCPv6 client. The network device receives the DHCPv6 request message from the DHCPv6 client. The network device may obtain address information of the DHCPv6 client according to the DHCPv6 solicit message. The network device may send the DHCPv6 reply message to the DHCPv6 client according the address information of the DHCPv6 client. The DHCPv6 reply message is used to configure the DHCPv6 client, which is a reply to the DHCPv6 solicit message. The DHCPv6 reply message includes the IPv6 prefix assigned to the DHCPv6 client by the network device and the network configuration parameter assigned to the DHCPv6 client by the network device; or the DHCPv6 reply message includes the IPv6 address assigned to the DHCPv6 client by the network device and the network configuration parameter assigned to the DHCPv6 client by the network device. After receiving the DHCPv6 reply message, the DHCPv6 client may store the management domain identifier of the network device, the IPv6 prefix and the network configuration parameter; or the DHCPv6 client may store the management domain identifier of the network device, the IPv6 address and the network configuration parameter. The DHCPv6 client may configure the DHCPv6 client itself according to the DHCPv6 reply message. In the case where there are multiple network devices functioning as the DHCPv6 servers in the network and the multiple network devices belong to different management domains, the multiple network devices can configure the same DHCPv6 client.

The network device may be a router or a switch which functions as the DHCPv6 server.

With the method according to the embodiment of the present invention, in the case where multiple network devices belong to different management domains and function as DHCPv6 severs, the multiple network devices functioning as the DHCPv6 severs can implement the configuration for the DHCPv6 client, thereby providing technical support for implementing the multi-homing IPv6 client network.

### Embodiment 3

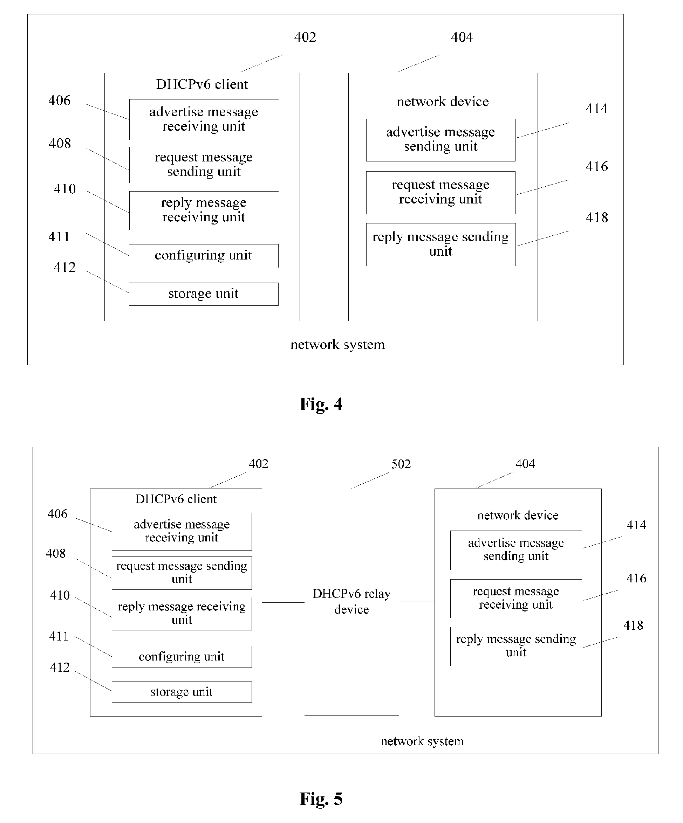

Referring to Fig. 4, a network system is provided according to an embodiment of the present invention. The network system includes a DHCPv6 client 402 and a network device 404 functioning as a DHCPv6 server.

The DHCPv6 client 402 includes an advertise message receiving unit 406, a request message sending unit 408, a reply message receiving unit 410, a configuring unit 411 and a storage unit 412. The network device 404 includes an advertise message sending unit 414, a request message receiving unit 416 and a reply message sending unit 418.

The advertise message receiving unit 406 is configured to receive a DHCPv6 advertise message from the advertise message sending unit 414 of the network device 404. The DHCPv6 advertise message includes a management domain identifier of the network device.

The request message sending unit 408 is configured to send a DHCPv6 request message to the request message receiving unit 416 of the network device 404 and store the management domain identifier in the storage unit 412, when the storage unit 412 does not store the management domain identifier.

The reply message receiving unit 410 is configured to receive a DHCPv6 reply message from the reply message sending unit 418 of the network device 404. The DHCPv6 reply message includes an IPv6 prefix assigned to the DHCPv6 client 402 by the network device 404 and a network configuration parameter assigned to the DHCPv6 client 402 by the network device 404; or the DHCPv6 reply message includes an IPv6 address assigned to the DHCPv6 client by the network device 404 and a network configuration parameter assigned to the DHCPv6 client by the network device 404.

The storage unit 412 is configured to store the management domain identifier of the network device, the IPv6 prefix and the network configuration parameter; or the storage unit 412 is configure to store the management domain identifier of the network device, the IPv6 address and the network configuration parameter.

The configuring unit 411 is configured to configure the DHCPv6 client according to the DHCPv6 reply message.

The advertise message sending unit 414 is configured to send the DHCPv6 advertise message to the advertise message receiving unit 406 of the DHCPv6 client 402. The DHCPv6 advertise message includes the management domain identifier of the network device 404.

The request message receiving unit 416 is configured to receive the DHCPv6 request message from the request message sending unit 408 of the DHCPv6 client 402.

The reply message sending unit 418 is configured to send the DHCPv6 reply message to the reply message receiving unit 410 of the DHCPv6 client 402. The DHCPv6 reply message is adapted to configure the DHCPv6 client 402. The DHCPv6 reply message includes the IPv6 prefix assigned to the DHCPv6 client 402 and the network configuration parameters assigned to the DHCPv6 client 402; or the DHCPv6 reply message includes the IPv6 address assigned to the DHCPv6 client 402 and the network configuration parameters assigned to the DHCPv6 client 402.

After the DHCPv6 client 402 is on line, a DHCPv6 solicit message may be broadcasted to other devices in the network. The DHCPv6 solicit message is adapted to request the network device functioning as the DHCPv6 server to configure the DHCPv6 client 402. After received the DHCPv6 solicit message, the network device 404 functioning as the DHCPv6 server may send, through the advertise message sending unit 414, the DHCPv6 advertise message to the advertise message receiving unit 406 of the DHCPv6 client 402. The DHCPv6 advertise message is adapted to notify the DHCPv6 client 402 that the network device 404 can configure the DHCPv6 client 402. The DHCPv6 advertise message includes the management domain identifier of the network device 404.

Optionally, the DHCPv6 advertise message includes a DHCPv6 option. The option includes the management domain identifier configured to identify a management domain to which the network device 404 belongs. The management domain identifier may be a name of an ISP or a name of an organization. The option may further include an option code and an option length. A format of the option is shown in Fig. 2.

The option code is used to indicate that the option carries the management domain identifier. The option code occupies 16 bits (bit) and ranges from 0 to 65535. The value of the option code may be predefined, as long as the value is not used by other types of option.

The option length is used to indicate a total length of the option, and the option length occupies 16 bits.

The management domain identifier is used to indicate the management domain.

The storage unit 412 of the DHCPv6 client 402 may store the management domain identifiers of all the network devices which have a function of DHCPv6 and have already established a configuration relationship with the DHCPv6 client 402. After receiving the DHCPv6 advertise message from the advertise message sending unit 414 of the network device 404, the DHCPv6 client 402 parses the option of the DHCPv6 advertise message. In the case where the option code of the option indicates that the option carries the management domain identifier, the DHCPv6 client 402 may obtain the management domain identifier of the network device 404. When the storage unit 412 of the DHCPv6 client 402 does not store the management domain identifier, it means that the DHCPv6 client 402 has not yet been configured by the network device 404. Therefore, the DHCPv6 client 402 may send the DHCPv6 request message to the request message receiving unit 416 of the network device 402 through the request message sending unit 408 and store the management domain identifier of the network device in the storage unit 412. The DHCPv6 request message is adapted to request the network device 404 to configure the DHCPv6 client 402. After the request message receiving unit 414 of the network device 404 receives the DHCPv6 request message, the reply message sending unit 416 may send the DHCPv6 reply message to the reply message receiving unit 410 of the DHCPv6 client 402. The DHCPv6 reply message includes the IPv6 prefix assigned to the DHCPv6 client 402 by the network device 404 and the network configuration parameter assigned to the DHCPv6 client 402 by the network device 404; or the DHCPv6 reply message includes the IPv6 address assigned to the DHCPv6 client 402 by the network device 404 and the network configuration parameter assigned to the DHCPv6 client 402 by the network device 404. After the reply message receiving unit 410 of the DHCPv6 client 402 receives the DHCPv6 reply message, the management domain identifier of the network device 404, the IPv6 prefix and the network configuration parameter are stored in the storage unit 412; or the management domain identifier of the network device 404, the IPv6 address and the network configuration parameter are stored in the storage unit 412. The DHCPv6 client 402 may configure the DHCPv6 client 402 itself according to the DHCPv6 reply message. In the case where there are multiple network devices functioning as the DHCPv6 servers in the network and the multiple network devices belong to different management domains, the multiple network devices can configure the same DHCPv6 client 402.

The network device 404 may be a router or a switch which functions as the DHCPv6 server.

Optionally, referring to Fig. 5, the system may further include a DHCPv6 relay device 502. The DHCPv6 relay device 502 has a DHCPv6 relay function. The DHCPv6 relay device 502 relays the DHCPv6 advertise message, the DHCPv6 request message and DHCPv6 reply message between the DHCPv6 client 402 and the network device 404.

With the system according to the embodiment of the present invention, in the case where multiple network devices belong to different management domains and functions as DHCPv6 severs, the multiple network devices functioning as the DHCPv6 severs can implement the configuration for the DHCPv6 client, thereby providing technical support for implementing the multi-homing IPv6 client network.

Those ordinary skilled in the art may understand that all or some of the steps of the above method embodiment may be carried out by relevant hardware instructed by programs. The programs may be stored in a computer readable storage media, the steps of the above method embodiment will be performed when executing the programs. The aforementioned storage media may include the media which can store program codes such as a ROM, a RAM, disk or an optical disk.

It should be noted that the above embodiments are merely intended to describe the technical solutions of the present invention, but not to limit the present invention. Although the present invention has been described in detail with reference to the aforementioned embodiments, it can be understood by those ordinary skilled in the art that the technical solutions of the aforementioned embodiments may be modified or some technical features of the aforementioned embodiments may be replaced by equivalent substitutions, and the modifications or substitutions do not make the essence of the corresponding technical solutions depart from the scope of the technical solutions of the embodiments of the present invention.

## Claims

1. A method for configuring a Dynamic Host Configuration Protocol for Internet Protocol version 6 (DHCPv6) client, the method being applied to a network with the DHCPv6 client and a network device functioning as a DHCPv6 server, wherein the method comprises:
receiving, by the DHCPv6 client, a DHCPv6 advertise message from the network device, wherein the DHCPv6 advertise message comprises a management domain identifier of the network device;
sending, by the DHCPv6 client, a DHCPv6 request message to the network device and storing the management domain identifier, when the DHCPv6 client does not save the management domain identifier; and
receiving, by the DHCPv6 client, a DHCPv6 reply message from the network device and configuring the DHCPv6 client according to the DHCPv6 reply message, wherein the DHCPv6 reply message comprises an IPv6 prefix assigned to the DHCPv6 client by the network device and a network configuration parameter assigned to the DHCPv6 client by the network device; or the DHCPv6 reply message comprises an IPv6 address assigned to the DHCPv6 client by the network device and a network configuration parameter assigned to the DHCPv6 client by the network device.

2. The method according to claim 1, wherein the DHCPv6 advertise message comprising the management domain identifier of the network device further comprises a DHCPv6 option,
wherein the option comprises an option code and a field of the management domain identifier, the option code is adapted to indicate whether the DHCPv6 option carries the management domain identifier, and the field of the management domain identifier is adapted to indicate the management domain identifier of the network device.

3. A method for configuring a Dynamic Host Configuration Protocol for Internet Protocol version 6 (DHCPv6) client, the method being applied to a network with the DHCPv6 client and a network device functioning as a DHCPv6 server, wherein the method comprises:
sending, by the network device, a DHCPv6 advertise message to the DHCPv6 client, wherein the DHCPv6 advertise message comprises a management domain identifier of the network device;
receiving, by the network device, a DHCPv6 request message from the DHCPv6 client; and
sending, by the network device, a DHCPv6 reply message to the DHCPv6 client, wherein the DHCPv6 reply message is adapted to configure the DHCPv6 client, the DHCPv6 reply message comprises an IPv6 prefix assigned to the DHCPv6 client by the network device and a network configuration parameter assigned to the DHCPv6 client by the network device; or the DHCPv6 reply message comprises an IPv6 address assigned to the DHCPv6 client and the network configuration parameters assigned to the DHCPv6 client.

4. The method according to claim 3, wherein the DHCPv6 advertise message comprising the management domain identifier of the network device further comprises a DHCPv6 option,
wherein the option comprises an option code and a field of the management domain identifier, wherein the option code is adapted to indicate whether the DHCPv6 option carries the management domain identifier, and the field of the management domain identifier is adapted to indicate the management domain identifier of the network device.

5. A Dynamic Host Configuration Protocol for Internet Protocol version 6 (DHCPv6) client, the DHCPv6 client being applied to a network with a network device functioning as a DHCPv6 server, the DHCPv6 client comprising an advertise message receiving unit, a request message sending unit, a reply message receiving unit, a configuring unit and a storage unit, wherein
the advertise message receiving unit is configured to receive a DHCPv6 advertise message from the network device, wherein the DHCPv6 advertise message comprises a management domain identifier of the network device;
the request message sending unit is configured to send a DHCPv6 request message to the network device and store the management domain identifier in the storage unit, when the storage unit does not save the management domain identifier;
the reply message receiving unit is configured to receive a DHCPv6 reply message from the network device, wherein the DHCPv6 reply message comprises an IPv6 prefix assigned to the DHCPv6 client by the network device and a network configuration parameter assigned to the DHCPv6 client by the network device; or the DHCPv6 reply message comprises an IPv6 address assigned to the DHCPv6 client by the network device and a network configuration parameter assigned to the DHCPv6 client by the network device;
the storage unit is configured to store the management domain identifier, the IPv6 prefix and the network configuration parameter; or the storage unit is configure to store the management domain identifier, the IPv6 address and the network configuration parameter; and
the configuring unit is configured to configure the DHCPv6 client according to the DHCPv6 reply message.

6. A network device functioning as a Dynamic Host Configuration Protocol for Internet Protocol version 6 (DHCPv6) server, the network device being applied to a network with a DHCPv6 client, wherein the network device comprises:
an advertise message sending unit, configured to send a DHCPv6 advertise message to the DHCPv6 client, wherein the DHCPv6 advertise message comprises a management domain identifier of the network device;
a request message receiving unit, configured to receive a DHCPv6 request message from the DHCPv6 client; and
a reply message sending unit, configured to send a DHCPv6 reply message to the DHCPv6 client, wherein the DHCPv6 reply message is adapted to configure the DHCPv6 client, the DHCPv6 reply message comprises an IPv6 prefix assigned to the DHCPv6 client by the network device and a network configuration parameter assigned to the DHCPv6 client by the network device; or the DHCPv6 reply message comprises an IPv6 address assigned to the DHCPv6 client by the network device and a network configuration parameter assigned to the DHCPv6 client by the network device.

7. A network system, comprising a DHCPv6 client and a network device functioning as a DHCPv6 server, wherein
the DHCPv6 client comprises an advertise message receiving unit, a request message sending unit, a reply message receiving unit, a configuring unit and a storage unit; and the network device functioning as the DHCPv6 server function comprises an advertise message sending unit, a request message receiving unit and a reply message sending unit, wherein
the advertise message receiving unit is configured to receive a DHCPv6 advertise message from the advertise message sending unit, wherein the DHCPv6 advertise message comprises a management domain identifier of the network device;
the request message sending unit is configured to send a DHCPv6 request message to the network device and store the management domain identifier in the storage unit, when the storage unit does not save the management domain identifier;
the reply message receiving unit is configured to receive a DHCPv6 reply message from the reply message sending unit, wherein the DHCPv6 reply message comprises an IPv6 prefix assigned to the DHCPv6 client by the network device and a network configuration parameter assigned to the DHCPv6 client by the network device; or the DHCPv6 reply message comprises an IPv6 address assigned to the DHCPv6 client by the network device and a network configuration parameter assigned to the DHCPv6 client by the network device;
the storage unit is configured to store the management domain identifier of the network device, the IPv6 prefix assigned to the DHCPv6 client by the network device ,and the network configuration parameters assigned to the DHCPv6 client by the network device; or the storage unit is configure to store the management domain identifier of the network device, the IPv6 address assigned to the DHCPv6 client by the network device, and the network configuration parameters assigned to the DHCPv6 client by the network device;
the configuring unit is configured to configure the DHCPv6 client according to the DHCPv6 reply message;
the advertise message sending unit is configured to send the DHCPv6 advertise message to the advertise message receiving unit, wherein the DHCPv6 advertise message comprises the management domain identifier of the network device;
the request message receiving unit is configured to receive the DHCPv6 request message from the request message sending unit; and
the reply message sending unit is configured to send the DHCPv6 reply message to the reply message receiving unit.

8. The network system according to claim 7, further comprising:
a DHCPv6 relay device, wherein the DHCPv6 relay device has a DHCPv6 relay function, and the DHCPv6 relay device is configured to relay the DHCPv6 advertise message, the DHCPv6 request message and DHCPv6 reply message between the DHCPv6 client and the network device.
